# EUROPÄISCHE PATENTANMELDUNG

(11) **EP 2 226 271 A2**
(43) Veröffentlichungstag der Anmeldung: **08.09.2010**
(21) Anmeldenummer: 10002147.6
(22) Anmeldetag: 03.03.2010
(51) Int. Cl.: B65G 1/02, A47B 96/14

(54) **Regalprofil mit einer Verstärkung**

(30) Priorität: 06.03.2009 DE 202009003257 U
(71) Anmelder: Klein GmbH Regalprüfung + Reparatur, 67744 Schweinschied (DE)
(72) Erfinder: Klein, Egon, 67744 Schweinschied (DE)
(74) Vertreter: Becker, Bernd

(57) **Zusammenfassung**

Bei einem aus einer horizontal oder schräg verlaufenden Strebe (3) oder einer vertikal verlaufenden Stütze (2) bestehenden Regelprofil mit einer Verstärkung ist ein Verstärkungsprofil (9) zumindest teilweise in das Regelprofil (1) eingesetzt oder umgreift zumindest bereichsweise das Regalprofil (1), wobei das Verstärkungsprofil mit dem Regalprofil fest verbunden ist.

## Beschreibung

Die Erfindung bezieht sich auf ein Regalprofil, bestehend aus einer horizontal oder schräg verlaufenden Strebe oder einer vertikal verlaufenden Stütze, mit einer Verstärkung.

Aus der Praxis ist es bekannt, eine beispielsweise durch einen Zusammenstoß mit einem Gabelstapler deformierte vertikale Stütze oder eine zwischen vertikalen Stützen horizontal oder schräg angeordnete Strebe in einem verschraubten Stützrahmen eines Regals auszutauschen oder im Fall eines geschweißten Stützrahmens den gesamten Stützrahmen zu ersetzen. Dies erfolgt jeweils unter einem erheblichen Aufwand, da oftmals das gesamte Regal leer geräumt werden muss.

Im Weiteren offenbart die DE 20 2008 004 312 U1 ein Reparatur- und Verstärkungsset für eine horizontal oder schräg verlaufende Strebe eines Regals, das eine Schiene zum Umgreifen der Strebe, mindestens eine auf der der Schiene gegenüberliegenden Seite der Strebe anzuordnende Gegenplatte und Schrauben umfasst. Darüber hinaus zeigt die DE 20 2008 000 889 U1 ein Reparatur- und Verstärkungsset für eine Stütze eines Regals, das eine Schiene zum Umgreifen der Stütze, mindestens eine auf der der Schiene gegenüberliegenden Seite der Stütze anzuordnende Gegenplatte und Schrauben sowie Unterlegscheiben umfasst. Bei einer relativ kleinen Beschädigung ist kein separates Richten der Strebe bzw. Stütze erforderlich, da das Richten mit der Anbringung der Schiene und der Gegenplatte einhergeht. Die Schiene kann beispielsweise im Querschnitt C-förmig sein. In Abhängigkeit von der Breite der Strebe oder der Verformung über die Länge der Strebe bzw. Stütze können mehrere Gegenplatten übereinander angeordnet werden.

Des Weiteren beschreibt die US 2005/0150853 A1 ein Reparatur- und Verstärkungsset für eine verformte vertikal ausgerichtete Stütze eines Regals mit einem C-förmigen Führungsteil, das an einem Ende einer U-förmigen Basisplatte, die eine quadratische Aussparung an einer Seite aufweist, befestigt ist. Zur Reparatur der Stütze wird zunächst die Basisplatte auf dem Boden befestigt. Nach einem Vorgang des Richtens liegt die verformte Stütze in dem C-förmigen Führungsteil ein, das mit der Stütze verschraubt wird. Nach der Anbringung des Reparatur- und Verstärkungssets trägt die Stütze keine Last. Die Verwendung dieses Reparatur- und Verstärkungssets ist insbesondere in Verbindung mit Stützen mit einer Bodenplatte nachteilig, da die vorhandene Bodenplatte an der deformierten Stütze zunächst entfernt werden muss.

Es ist Aufgabe der Erfindung, ein Regalprofil der eingangs genannten Art zu schaffen, das kostengünstig und schnell zu reparieren ist.

Erfindungsgemäß wird die Aufgabe dadurch gelöst, dass ein Verstärkungsprofil zumindest teilweise in das Regalprofil eingesetzt ist oder zumindest bereichsweise das Regalprofil umgreift, wobei das Verstärkungsprofil mit dem Regalprofil fest verbunden ist.

In der Regel wird ein beschädigtes Regalprofil, also eine Strebe oder Stütze, zunächst gerichtet und anschließend mit dem Verstärkungsprofil derart geschient, dass das Regal ohne einen Austausch des gerichteten Regalprofils weiter in Betrieb bleiben kann. Die zu übertragenden Kräfte werden im Bereich vor der gerichteten Stelle über die eingebauten Befestigungsmittel von dem Regalprofil in das Verstärkungsprofil und hinter der gerichteten Stelle von dem Verstärkungsprofil in das Regalprofil eingeleitet. Das Verstärkungsprofil wird derart an dem Regalprofil befestigt, dass sich die gerichtete Stelle in etwa in der Mitte des Verstärkungsprofils befindet.

In Ausgestaltung ist das Regalprofil über seine Längserstreckung einseitig offen, wobei der Öffnungsbereich durch zwei Schenkel gebildet ist und das Verstärkungsprofil ist zwischen die Schenkel eingesetzt oder umgreift zumindest bereichsweise die Schenkel. Beispielsweise kann das Regalprofil einen annähernd T-förmigen Querschnitt aufweisen, wobei ein stegförmiger Abschnitt durch zwei parallel und beabstandet zueinander verlaufende Schenkel gebildet ist, die im weiteren Verlauf einen flanschförmigen Abschnitt ausbilden. Selbstverständlich kann das Regalprofil auch im Querschnitt U-förmig sein, wobei zwei zueinander beabstandete Schenkel über einen Steg miteinander verbunden sind. Zwischen die Schenkel ist jeweils das Verstärkungsprofil eingesetzt.

Vorzugsweise ist das Verstärkungsprofil im Querschnitt C-, U- oder viereck- oder winkelförmig gestaltet. Beispielsweise ist das U-förmig gestaltete Verstärkungsprofil mit seinem die Schenkel verbindenden Steg derart in das Regalprofil eingesetzt, dass die freien Enden der Schenkel zu den freien Enden der Schenkel des Regalprofils korrespondieren, oder dass sich der Steg des Verstärkungsprofils im Bereich der freien Enden der Schenkel des Regalprofils befindet und die freien Enden der Schenkel in Richtung des Verstärkungsprofils ragen. Auch ein viereckförmiges, insbesondere quadratisches oder rechteckförmiges, Rohrprofil ist als Verstärkungsprofil beispielsweise zwischen den Schenkeln des Regalprofils zu befestigen oder in das Regalprofil einschiebbar.

Zur Fertigung einer wirksamen Verbindung ist das Verstärkungsprofil mit dem Regalprofil verschraubt oder vernietet, insbesondere im Bereich der jeweils aneinanderliegenden Schenkel. Damit die Montage vor Ort einfach zu bewerkstelligen ist, weist das Verstärkungsprofil Löcher auf, die in ihrer Größe und Lage zu Öffnungen des Regalprofils korrespondieren.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigt:
- Fig.1: eine perspektivische Teildarstellung eines deformierten Regalprofils, das im Zusammenhang mit der Erfindung verwendet wird,
- Fig.2: eine perspektivische Teildarstellung nach Fig. 1 mit einem Verstärkungsprofil,
- Fig.3: einen Querschnitt durch das Regalprofil nach Fig. 2,
- Fig.4: einen Querschnitt durch das Regalprofil nach Fig. 2 mit einem Verstärkungsprofil in einer ersten alternativen Ausgestaltung,
- Fig.5: einen Querschnitt durch das Regalprofil nach Fig. 2 mit einem Verstärkungsprofil in einer zweiten alternativen Ausgestaltung und
- Fig.6: einen Querschnitt durch das Regalprofil nach Fig. 2 mit einem Verstärkungsprofil in einer dritten alternativen Ausgestaltung.

Das Regal dient zur Aufnahme von mit Gütern beladenen Paletten, Gitterboxen, Lagerböden oder dergleichen und ist aus mehreren Regalprofilen 1 zusammengesetzt, die zum einen als vertikale Stützen 2 und zum anderen als jeweils zwei benachbarte Stützen 2 versteifende horizontale und diagonale Streben 3 ausgebildet sind. Jede Stütze 2 und Strebe 3 besteht aus einem mehrfach abgekanteten Blechprofil und die Stütze 2 steht mittels einer Fußplatte 4 auf dem Boden.

Die Stütze 2 weist einen annähernd T-förmigen Querschnitt auf und ist über ihre Längserstreckung einseitig offen, wobei der Öffnungsbereich 5 und damit der stegförmige Abschnitt 6 der T-Form durch zwei Schenkel 7 gebildet ist, die in mehreren Abwinklungen in einen senkrecht dazu ausgerichteten flanschförmigen Abschnitt 8 übergehen.

Im vorliegend dargestellten Fall einer Verformung einer der Stützen 2, beispielsweise durch eine Kollision mit einem Gabelstapler, wird die Stütze 2 zunächst gerichtet und anschließend ein Verstärkungsprofil 5 derart angebracht, dass sich der ursprünglich verformte Bereich der Stütze 2 in etwa in der Mitte des Verstärkungsprofils 5 befindet.

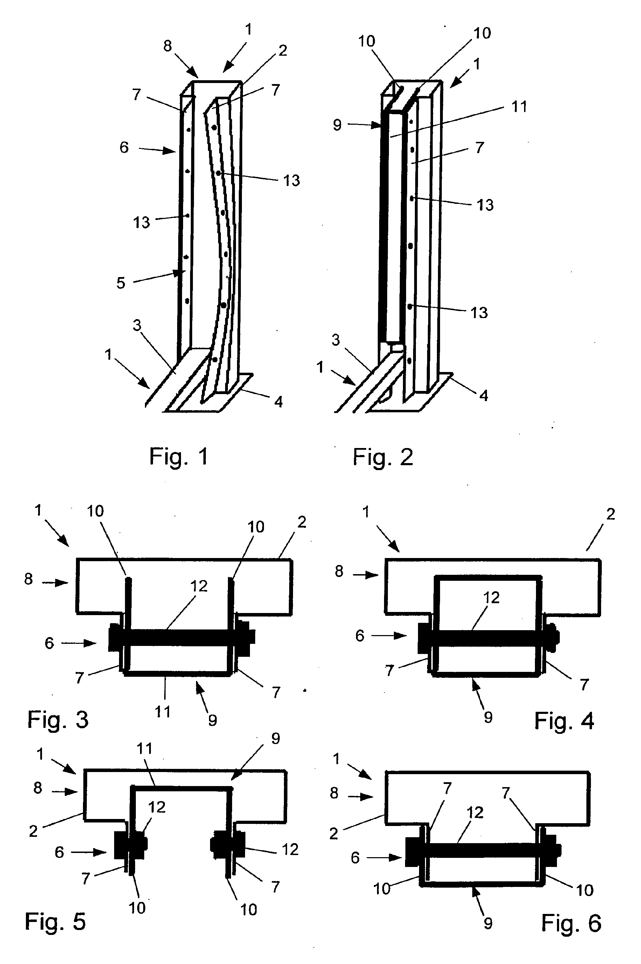

Gemäß den Fig. 2 und 3 ist das im Querschnitt U-förmige Verstärkungsprofil 9 mit seinen Schenkeln 10 zwischen die Schenkel 7 der Stütze 2 eingesetzt, so dass ein die Schenkel 10 des Verstärkungsprofils 9 verbindender Steg 11 den Öffnungsbereich 5 der Stütze 2 verschließt. Das Verstärkungsprofil 9 ist mittels Schrauben 12, die sich durch den gesamten stegförmigen Abschnitt 6 der Stütze 2 erstrecken, mit der Stütze 2 fest verbunden. Zur Aufnahme der Schrauben 12 ist das Verstärkungsprofil 9 mit Löchern versehen, die in ihrer Größe und Lage zu Öffnungen 13 der Stütze 2 korrespondieren.

Nach Fig. 4 ist das Verstärkungsprofil 9 rohrförmig mit einem im Wesentlichen viereckförmigen Querschnitt ausgebildet und mittels sich durch den gesamten stegförmigen Abschnitt 6 der Stütze 2 erstreckender Schrauben 12 mit der reparierten Stütze 2 verbunden.

Das im Querschnitt U-förmige Verstärkungsprofil 9 ist gemäß Fig. 5 derart mit seinen Schenkeln 10 zwischen die Schenkel 7 der Stütze 2 eingesetzt, dass der die Schenkel 10 des Verstärkungsprofils 9 verbindende Steg 11 im Bereich des stegförmigen Abschnitts 6 der Stütze 2 aufgenommen und der Bereich zwischen den Schenkeln 10 des Verstärkungsprofils 9 zugänglich ist. Zur Befestigung des Verstärkungsprofils 9 an der Stütze 2 sind jeweils aneinanderliegende Schenkel 7, 10 der Stütze 2 und des Verstärkungsprofils 9 mit Schrauben 12 verbunden.

Nach Fig. 6 ist das im Querschnitt U-förmige Verstärkungsprofil 9 derart der Stütze 2 zugeordnet, dass das Verstärkungsprofil 9 mit seinen Schenkeln 10 die Schenkel 7 der Stütze 2 außenseitig übergreift, wobei der die Schenkel 10 des Verstärkungsprofils 9 verbindende Steg 11 den Öffnungsbereich 5 der Stütze 2 verschließt. Die Schrauben 12 zur Verbindung des Verstärkungsprofils 9 mit der Stütze 2 erstrecken sich über die gesamte Breite des Verstärkungsprofils 9 und damit auch über den stegförmigen Abschnitt 6 der Stütze 2.

## Patentansprüche

1. Regalprofil, bestehend aus einer horizontal oder schräg verlaufenden Strebe (3) oder einer vertikal verlaufenden Stütze (2), mit einer Verstärkung, **dadurch gekennzeichnet, dass** ein Verstärkungsprofil (9) zumindest teilweise in das Regalprofil (1) eingesetzt ist oder zumindest bereichsweise das Regalprofil (1) umgreift, wobei das Verstärkungsprofil (9) mit dem Regalprofil (1) fest verbunden ist.

2. Regalprofil nach Anspruch 1, **dadurch gekennzeichnet, dass** das Regalprofil (1) über seine Längserstreckung einseitig offen ist, wobei der Öffnungsbereich (5) durch zwei Schenkel (7) gebildet ist und das Verstärkungsprofil (9) zwischen die Schenkel (7) eingesetzt ist oder zumindest bereichsweise die Schenkel (7) umgreift.

3. Regalprofil nach Anspruch 1 oder 2, **dadurch gekennzeichnet, dass** das Verstärkungsprofil (9) im Querschnitt C- oder U- oder viereck- oder winkelförmig gestaltet ist.

4. Regalprofil nach einem der Ansprüche 1 bis 3, **dadurch gekennzeichnet, dass** das Verstärkungsprofil (9) mit dem Regalprofil (1) verschraubt oder vernietet ist, insbesondere im Bereich der jeweils aneinanderliegenden Schenkel (7, 10).

5. Regalprofil nach einem der Ansprüche 1 bis 4, **dadurch gekennzeichnet, dass** das Verstärkungsprofil (9) Löcher aufweist, die in ihrer Größe und Lage zu Öffnungen (13) des Regalprofils (1) korrespondieren.
